(19) Europäisches Patentamt
European Patent Office
Office européen des brevets

(11) EP 0 568 738 B1

## (12) EUROPÄISCHE PATENTSCHRIFT

(45) Veröffentlichungstag und Bekanntmachung des Hinweises auf die Patenterteilung:
**22.04.1998  Patentblatt 1998/17**

(51) Int Cl.6: **H01S 3/125**, H01S 3/082

(21) Anmeldenummer: **92250114.3**

(22) Anmeldetag: **08.05.1992**

(54) **Laseroszillator**

Laser oscillator

Oscillateur laser

(84) Benannte Vertragsstaaten:
**CH DE FR GB IT LI NL SE**

(43) Veröffentlichungstag der Anmeldung:
**10.11.1993  Patentblatt 1993/45**

(73) Patentinhaber: **ELIGHT LASER SYSTEMS GmbH**
**D-14513 Teltow (DE)**

(72) Erfinder:
- **Wolf, Jean-Pierre Louis**
  **W-1000 Berlin 39 (DE)**
- **Woeste, Ludger Heindrich, Dr.**
  **W-1000 Berlin 39 (DE)**

(74) Vertreter: **Hengelhaupt, Jürgen, Dipl.-Ing.**
**Patentanwälte**
**Gulde Hengelhaupt Ziebig,**
**Lützowplatz 11-13**
**10785 Berlin (DE)**

(56) Entgegenhaltungen:
**FR-A- 2 245 108          US-A- 3 711 791**

- **APPLIED PHYSICS LETTERS Bd. 16, Nr. 11, 1. Juni 1971, NEW YORK US Seiten 494 - 496 M,J.LANDRY 'VARIABLY SPACED GIANT PULSES FROM MULTIPLE LASER CAVITIES IN A SINGLE LASING MEDIUM'**
- **IEEE JOURNAL OF QUANTUM ELECTRONICS. Bd. QE-9, Nr. 6, Juni 1973, NEW YORK US**
- **Seiten 604 - 606 M.J.LANDRY 'A PULSED RUBY LASER WITH INDIVIDUALLY Q-SWITCHED MULTIPLE CAVITIES'**

**Beschreibung**

Die Erfindung betrifft einen Laseroszillator und basiert auf einem abstimmbaren Laser zur simultanen oder alternierenden Erzeugung mehrerer Wellenlängen.

Aufgrund der zahlreichen Anwendungen von abstimmbaren Lasern mit mehreren Wellenlängen, wie Multi-Photonen-Anregung, das CARS (Coherent Antistokes Raman Scattering) oder DIAL (Differential Absorption LIDAR), wurden in der Vergangenheit verschiedene Laser-Konfigurationen entwickelt, um gleichzeitig oder alternierend mehrere Wellenlängen mit dem gleichen Lasersystem zu erzeugen.

Unter den bisherigen Verfahren erlaubte keine Konfiguration sowohl die simultane als auch die alternierende Betriebsweise ohne erhebliche Effizienzverluste.

Der einfache Strahlversatz durch eine parallele Platte, wie er von Bréchignac et al in N.D. Hung, P. Brechignac, Applied Optics 27, 1906 (1988) beschrieben wurde, erlaubt z.B. nur die alternierende Betriebsweise, die zusätzlich durch eine lange Umschaltzeit eingeschränkt wird.

In der Applied Physics Letters, Bd. 16, Nr. 11, 1. Juni 1971, Seiten 494-496 wird ein Lasersystem für die Anwendung in der Fotographie und in der Holographie unter Verwendung von stationären oder drehenden Prismen beschrieben, wobei relativ verzögerte Laserimpulse von verschiedenen Hohlräumen hergestellt werden, wobei die Hohlräume in einem einfachen Lasermedium angeordnet und die Emissionszeiten der Hohlräume unabhängig voneinander sind.

Die FR-A-2 245 108 beschreibt ein auch zur Selektivabsorptionsmessung in der Atmosphäre anwendbares Verfahren, mit dem kohärente Lichtstrahlenbündel von regulierbarer Wellenlänge und Dauer in pausenloser Aufeinanderfolge von einem Laser ausgesendet werden, wobei das Verfahren dadurch gekennzeichnet ist, daß in den Weg des Lichtstrahlenbündels im mitschwingenden Resonator des Lasers wenigstens ein dünnes Plättchen gesetzt wird, welches das Laserstrahlenbündel in wenigstens zwei Schenkel teilen kann, wobei in mindestens einem Schenkel des Strahlenbündels ein mechanisches Mittel zum Unterbrechen des Weges des Lichtes in dem Schenkel oder den Schenkeln in regelmäßigen Zeitabständen angeordnet ist. Die in den Schenkeln des Laserstrahlenbündels liegenden Wellenlängen-Auswählelemente sind vorzugsweise Prismen oder Parallellinienraster.

Die bisher bekannten Anordnungen weisen folgende Nachteile auf:
Erheblich eingeschränkte Wahlmöglichkeit der verschiedenen Wellenlängen und der Typen der Resonatoren (Wahl nicht unabhängig, Wahl eingeschränkt auf dicht beieinanderliegende Wellenlängen, Nicht-Achromatismus), ungenaue Bestimmbarkeit der Wellenlängen, Schwierigkeiten bei der Justierung der Strahlen, unterschiedliche Polarisationsrichtungen, erhebliche Verluste durch das Einfügen, oder schließlich in der simultanen Betriebsart Instabilitäten und Verluste der Ausbeute durch signifikante Konkurrenz der beiden emittierten Moden.

Der Erfindung liegt die Aufgabe zugrunde, unter Verwendung nur eines abstimmbaren Lasersystems die genannten Probleme bei der räumlichen und zeitlichen Überlagerung der verschiedenen Strahlen zu eliminieren und die Wahl zwischen den beiden Betriebsweisen ohne irgendeine Modifikation der Anordnung zu ermöglichen.

Diese Aufgabe wird durch die Merkmale im Hauptanspruch in Verbindung mit den zweckmäßig ausgestaltenden Merkmalen der Unteransprüche gelöst.

Der erfindungsgemäße Oszillator zur gleichzeitigen oder alternierenden Erzeugung von mehreren Wellenlängen besteht aus einem abstimmbaren laser-aktiven Medium, das zwischen mehrere Resonatoren eingebracht wird, die durch ein polygonales Prisma mit parallelen Seitenflächen geometrisch gekoppelt werden, welches einen simultanen oder durch Rotation und/oder Translation des Prismas einen alternierenden Betrieb ermöglicht.

Die Probleme bei der räumlichen und zeitlichen Überlagerung der verschiedenen Strahlen wird mit der Erfindung eliminiert, ganz abgesehen von dem ökonomischen Vorteil, den die Verwendung nur eines abstimmbaren Lasersystems darstellt.

Die hier beschriebene Erfindung der geometrischen Kopplung mehrerer Laserresonatoren durch ein polygonales Prisma erlaubt die Wahl zwischen den beiden Betriebsweisen ohne irgendeine Modifikation der Anordnung.

Das polygonale Prisma mit parallelen Seitenflächen bietet gegenüber anderen Techniken zur Strahlteilung vier wesentliche Vorteile:

- Es wird keine optische Veränderung des Strahls im Resonator verursacht, da der Strahlversatz parallel zur optischen Achse erfolgt, was eine Auswahl der dispersiven Elemente, des Typs der Resonatoren (auch mit Filterung der Superstrahlung) und der Wellenlänge ohne Einschränkungen durch achromatische Effekte ermöglicht.

- Die Benutzung einer Kante des Prismas ermöglicht die Teilung des einfallenden Strahls in zwei parallele Strahlen und damit den simultanen Betrieb von zwei Resonatoren und somit die gleichzeitige Emission von zwei Wellenlängen.

- Die simultane Betriebsweise ist stabil, da die zur Einfallsrichtung parallele Aufteilung des Strahls eine gleichzeitige aber im laser-aktiven Medium räumlich getrennte Existenz der beiden Emissionsmoden ermöglicht, wodurch konkurrierende Verstärkungseffekte der beiden Wellenlängen im aktiven Medium wesentlich reduziert werden und damit eine Vergrößerung des Abstimmbereiches der beiden Resonatoren ermöglichen.

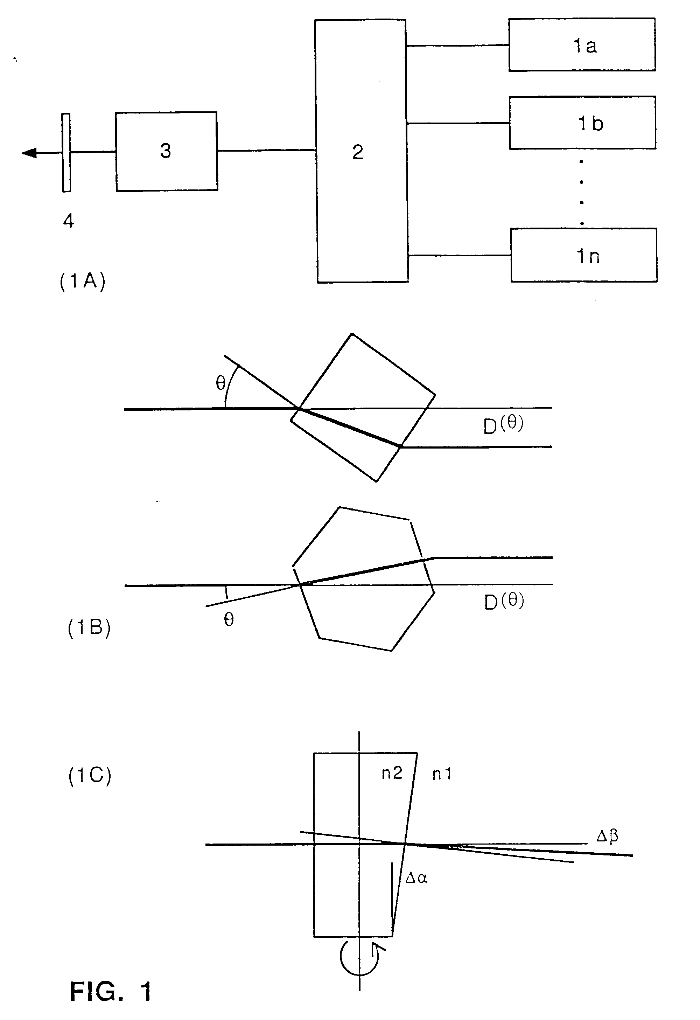

- Durch eine leichte Nicht-Parallelität $\Delta\alpha$ auf einer oder mehreren Seiten des polygonalen Prismas (s. Fig. 1C) kann die Zahl der aufgeteilten Strahlkomponenten und somit der verfügbaren Wellenlängen erhöht werden. Beim Durchgang durch die abgeschrägte Seitenfläche des Prismas verschiebt sich durch die Änderung des Einfallswinkels auf das dispersive Element des Resonators die Wellenlänge des Strahls. So können zum Beispiel bei Verwendung eines rotierenden Prismas mit quadratischem Querschnitt und einer um den Winkel $\Delta\alpha$ abgeschrägten Seitenfläche, mit dem zwei Resonatoren geometrisch gekoppelt werden, vier alternierende Wellenlängen erzeugt werden; zwei Wellenlängen entsprechend der Einstellung der dispersiven Elemente der beiden Resonatoren und zwei dazu leicht verschobenen Wellenlängen durch die Änderung des Einfallswinkels. Diese Anordnung ist vorteilhaft beim Einsatz in Systemen, die Paare von dicht beieinander liegenden Wellenlängen verwenden, wie beispielsweise das differentielle Absorptions-LIDAR (DIAL).

Eine Grundlage der Erfindung ist ein polygonales Prisma mit parallelen Seitenflächen, welches ohne Veränderungen verschiedene Laserresonatoren geometrisch koppelt, ohne die oben beschriebenen Nachteile zu haben. Die Flächen der Prismen sind mit einer Anti-Reflex-Beschichtung versehen, um die möglichen Reflexionsverluste zu reduzieren. Die Anzahl der Oberflächen ist ein Kompromiß zwischen der Amplitude der optischen Parallelverschiebung und der Geschwindigkeit, mit der zwischen den Resonatoren durch Rotation des Prismas gewechselt werden kann. Zwei reguläre Polygone sind als Prismen besonders geeignet: Ein Prisma mit quadratischer Grundfläche für große optische Verschiebungen und ein Prisma mit hexagonaler Grundfläche für hohe Wechselgeschwindigkeiten. Ähnliche Konfigurationen können auch durch Spiegelung, Doppelbrechung, nichtlineare optische Schaltung, Plasmaschaltung, druckinduzierte doppelbrechende Schaltung, akusto-optische Schaltung oder Schaltung auf fiberoptischen Matrizen realisiert werden.

Die Erfindung wird nachstehend an Hand von in den Figuren dargestellten Ausführungsbeispielen näher erläutert.

Es zeigen

Fig. 1 das Funktionsprinzip der Erfindung

1A ein Blockschaltbild der Erfindung

1B Ausführungsbeispiele der Verwendung von Prismen mit quadratischen bzw. hexagonalen Grundflächen

1C die Neigung einer Fläche gegenüber der Rotationsachse

Fig. 2 das Funktionsprinzip der simultanen Betriebsart der Erfindung

2A das Beispiel eines Prismas mit quadratischen Grundflächen

2B das Beispiel eines Prismas mit quadratischen Grundflächen und abgeschliffenen Kanten

Fig. 3 die Funktion der Erfindung unter Verwendung eines Resonators mit doppelter Gitterreflexion

Fig. 4 die Funktion der Erfindung unter Verwendung eines Resonators in U-Form.

Das Funktionsprinzip der Erfindung ist in Fig. 1A dargestellt: das aktive Medium 3 emittiert Laserstrahlung der Wellenlängen, die durch die Resonatoren, d.h. durch die Auskoppeleinheit 4 und die dispersiven Elemente 1a, 1b, ... 1n bestimmt sind, wobei die Resonatoren simultan oder alternierend durch das rotierende polygonale Prisma 2 ausgewählt werden. Das Prisma mit parallelen Flächen erzeugt eine Parallelverschiebung des einfallenden Strahls (Fig. 1B) mit einer Amplitude

$$D(\Theta) = L \sin(\Theta) \left\{ \sqrt{\frac{1-\sin^2\Theta}{N^2 - \sin^2\Theta}} \right\}$$

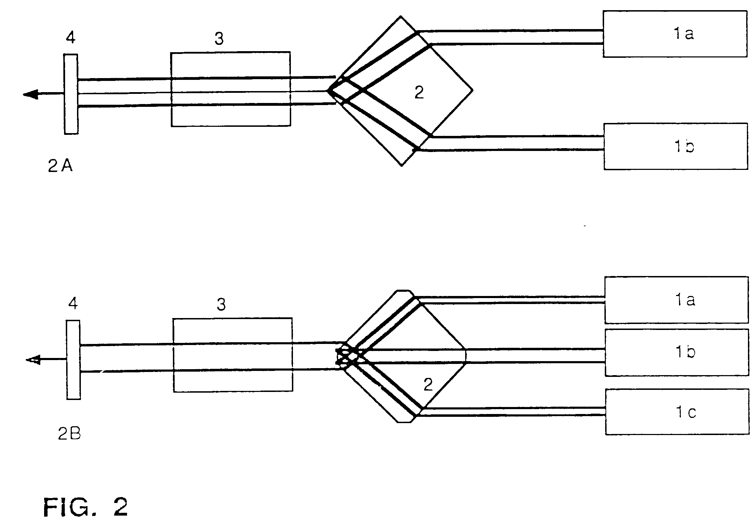

(L ist die Distanz zwischen den parallelen Flächen, $\Theta$ der Einfallswinkel und N der relative Brechungsindex $n_2/n_1$), welche eine geometrische Auswahl des einen oder anderen dispersiven Elements erlaubt. Die Auswahl des Resonators und damit die Auswahl der emittierten Wellenlänge geschieht entweder alternierend, beispielsweise durch die Rotation des Prismas um seine Längsachse, oder simultan (Fig.2). Fig. 1B zeigt die Beispiele der gebräuchlichsten Prismen mit hexagonalen bzw. quadratischen Grundflächen.

Um unterschiedliche Paare dicht benachbarter Wellenlängen zu erhalten, wird eine Fläche leicht um einen Winkel $\Delta\alpha$ gegenüber der Rotationsachse geneigt (Fig. 1C). Die geneigte Seite induziert nun eine feste Verstimmung der Ausgangswellenlänge durch Veränderung des Einfallswinkels des Strahls auf die dispersiven Elemente 1a ... 1n um einen Wert $\Delta B = \Delta\alpha - A \sin(N \sin(\Delta\alpha))$. Dadurch emittiert derselbe Resonator zwei unterschiedliche Wellenlängen (Grundwellenlänge und versetzt) in Abhängigkeit von der Position des rotierenden Prismas: fällt der Strahl durch die parallelen Flächen, so wird die Grundwellenlänge emittiert, fällt er durch die zueinander geneigten Flächen, wird die versetzte Wellenlänge emittiert. Diese Differenz kann z.B. durch Druckvariation verändert werden.

Das Funktionsprinzip der simultanen Betriebsart der Erfindung ist in Fig. 2 dargestellt, als Beispiel ein Prisma mit quadratischen Grundflächen (Fig. 2A). Der vom aktiven Medium 3 emittierte Strahl wird durch das Prisma 2 geometrisch in zwei Strahlen geteilt, die die Resonatoren, welche aus der Auskoppeleinheit 4 und den dispersiven Elementen 1a bzw. 1b bestehen, beleuchtet. Die Auskoppeleinheit ist hier schematisch durch einen teilreflektierenden Spiegel dargestellt, jedoch sind auch ganz andere Formen der Strahlungsauskopplung möglich, wie z.B. die Reflexion zu einem der Prismen des Resonators oder an einer Kante. Die Laseremission geschieht nun simultan auf den zwei Wellenlängen, die durch die Resonatoren bestimmt sind. Fig. 2A zeigt, wie die geometrische Aufspaltung durch das angehaltene Prisma 2 im aktiven Medium erfolgt, wodurch die Konkurrenz zwischen den Moden verhindert wird, was einen ausreichend großen Abstimmbereich für beide Resonatoren und eine stabile Funktion gewährleistet. Die Relativenergie zwischen den beiden Wellenlängen wird durch Feinjustierung der Position eingestellt.

Der anteilmäßig auf jeder der beiden Flächen auftreffende Bruchteil des einfallenden Strahls variiert den Gütefaktor der beiden Resonatoren und favorisiert damit den einen oder anderen Resonator. Die Feineinstellung der Relativenergie zwischen den Wellenlängen erlaubt speziell die Kompensation der unterschiedlichen Verstärkungen der beiden Wellenlängen durch das aktive Medium. Es können auch irreguläre Polygone verwendet werden, wie z.B. ein Prisma mit quadratischer Grundfläche, bei dem jede Kante so abgeschliffen wurde, daß zu den vier großen parallelen Flächen weitere vier schmale parallele Flächen vorhanden sind (Fig. 2B). Stellt man nun den Laserstrahl auf eine abgeschnittene Kante, so trifft er auf drei Flächen, was eine Separation in drei Strahlen und damit eine gleichzeitige Emission von drei Wellenlängen simultan erlaubt.

Das bewegte Prisma kann selbstverständlich auch dermaßen gespalten werden, daß sich dadurch ein Etalon-Effekt ergibt. Da der Einstellwinkel der Rotation relativ unkritisch ist, das Transmissions-Maximum des Etalons jedoch sehr kritisch von dem Einstellwinkel abhängt, kann somit auch eine hochauflösende Justierung im Verlauf der Rotationsbewegung des Prismas erzielt werden. Ein analoges Ergebnis kann selbstverständlich auch dadurch erzielt werden, daß durch Bedampfung einer Interferenzschicht auf dem Prisma ähnliche Etalon-Effekte erzielt werden.

Eine spektrale Verbesserung wird beispielsweise durch ein gemeinsames Etalon für die verschiedenen Resonatoren (z.B. zwischen dem rotierenden Prisma und dem Auskoppelelement) hervorgerufen. Die völlig unabhängig voneinander gewählten Wellenlängen der unterschiedlichen Resonatoren können mit verschiedenen Moden des Etalons in Übereinstimmung gebracht werden, wodurch gleichsam die spektrale Verbesserung der unterschiedlichen Wellenlängen erreicht wird.

Zur Multiplikation der möglichen Wellenlängen-Schaltfunktion ist es möglich, das Prisma durch eine fiberoptische Matrix zu ersetzen.

Ein entscheidender Vorteil der Erfindung ist die große Flexibilität in bezug auf die Auswahl des aktiven Mediums und des Resonatortyps. Dadurch kann die Erfindung sowohl für Festkörper und Gaslaser, die auf vielen diskreten Linien emittieren, als auch für kontinuierlich durchstimmbare Laser wie Farbstofflaser oder vibronische Festkörperlaser (Ti:Al$_2$O$_3$, Alexandrite, Co: MgF$_2$...) verwendet werden.

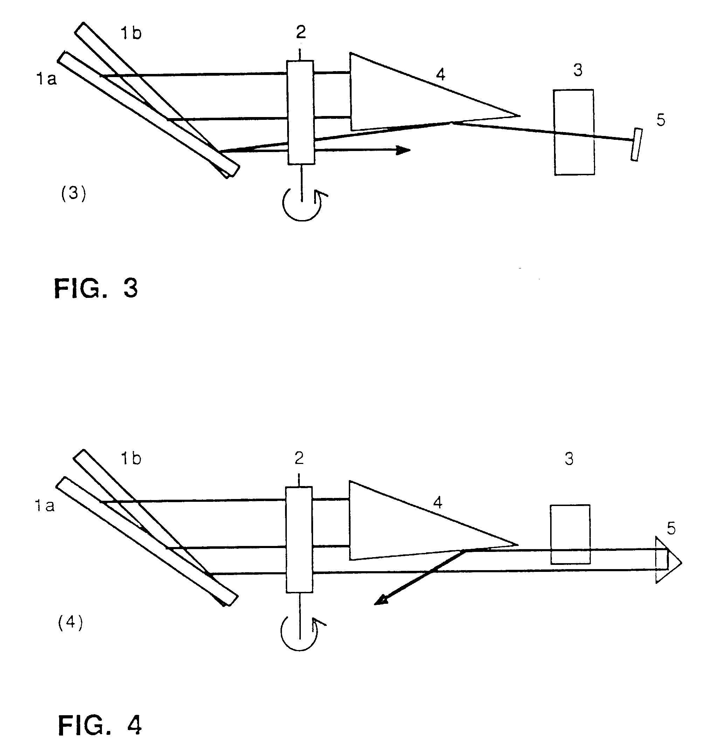

Dank der Parallelverschiebung des Strahls können alle Resonatortypen verwendet werden: Die Elemente 1a ... 1n können auch gut aus einfachen dispersiven Elementen (Prismen, Etalons, doppelbrechende Filter, ...) und einem Spiegel am Ende des Resonators bestehen wie auch aus Gittern in Standardkonfiguration (Littrow, Teleskopaufweitung, Grazing Incidence etc.). Desgleichen sind auch komplexe Resonatoren wie z.B. der Resonator mit doppelter Gitterreflexion oder die U-Form besonders geeignet. Der letztgenannte Resonatortyp ist besonders attraktiv, da er eine aktive Unterdrückung der Superstrahlung (Amplified Spontaneous Emission, ASE) erlaubt. Die Fig. 3 und 4 zeigen die Funktion der Erfindung im Fall des Resonators mit zweifacher Passage des Gitters und im Fall des Resonators in U-Form.

Im Fall des Laseroszillators mit doppelter Gitterreflexion (Fig. 3), wie er von Lambda Physik (DE 2918863 C2) verwendet wird, ist das aktive Medium 3 in einem Littrow-Resonator, bestehend aus Resonatorendspiegel 5, Strahlaufweiter 4 und dem Gitter 1, eingeschlossen. Die Auskoppeleinheit besteht aus der partiellen Reflexion auf der Fläche eines der Prismen des Strahlaufweiters. Die Laseremission wird ein zweites Mal am selben Gitter reflektiert. Die Einfallswinkel auf das Gitter innerhalb und außerhalb des Resonators liegen dicht beieinander. Daher wirkt die Reflexion als Filter für die ASE. Die Umwandlung eines Oszillators in einen laser mit mehreren geometrisch gekoppelten Resonatoren mit Hilfe der hier beschriebenen Erfindung ist sehr einfach. Es genügt die Einfügung des polygonalen rotierenden Prismas zwischen das aktive Medium 3 und den unterschiedlichen Gittern 1a ... 1n (in der Abbildung sind nur zwei Gitter gezeigt). Das rotierende Prisma kann aber auch sehr gut zwischen Strahlaufweiter und aktives Medium oder zwischen den Gittern und dem Strahlaufweiter positioniert werden. Man erhält dadurch simultan oder alternierend mehrere Wellenlängen wie bei den Konfigurationen der Fig. 1 und 2, jedoch mit höherer spektraler Reinheit.

Im Fall des U-Resonators (Fig. 4) ist die Vorgehensweise analog mit Ausnahme des Poro-Prismas 5 (oder zweier Spiegel), das den Resonatorendspiegel ersetzt und dadurch der Resonator aus zwei Reflexionen auf dem Gitter gebildet wird. Das Neue hierbei ist, daß die Verschiebung des Strahls durch das polygonale Prisma parallel erfolgt, so daß die Einfügung des Prismas und die Kopplung der Resonatoren 1a ... 1n keinerlei Schwierigkeiten bereiten.

**Patentansprüche**

1. Laseroszillator zur gleichzeitigen oder alternierenden Erzeugung von mehreren Wellenlängen, bestehend aus einem aktiven Medium (3), das auf mehreren diskreten Wellenlängen oder einem kontinuierlichen Spektrum emittiert und zwischen mehrere Resonatoren (4; 1a, 1b, ..... 1n) eingebracht wird, die durch ein polygonales Prisma (2) geometrisch gekoppelt sind und damit einen simultanen oder durch Rotation und/oder Translation dieses Prismas (2) einen alternierenden Betrieb ohne irgend eine weitere Modifikation der Anordnung ermöglichen, wobei das Prisma eine im aktiven Medium räumlich getrennte Aufteilung der jeweiligen mehreren Wellenlängen erzeugt.

2. Laseroszillator gemäß Anspruch 1, wobei das zur Strahlung verwendete polygonale Prisma (2) an einer oder mehreren Seiten leicht abgeschrägt ist und damit die Erzeugung verschiedener Paare von nahe beieinanderliegenden Wellenlängen ermöglicht und/oder abgeflachte Kanten aufweist, und damit durch Aufspaltung des eintretenden Strahls in drei austretende Strahlen den simultanen Betrieb auf drei verschiedenen Wellenlängen ermöglicht.

3. Laseroszillator gemäß einem der Ansprüche 1 bis 2, wobei die gekoppelten Resonatoren aus einer gemeinsamen Strahlauskopplung (4) und jeweils einer Anordnung von dispersiven Prismen oder einem doppelbrechenden Filter und einem Spiegel als Abschluß der Kavität (1a, 1b, ... 1n) oder jeweils einer Anordnung von dispersiven Gittern in Littrow- oder Littmann-, d.h. "grazing incidence", -Anordnung bestehen (1a, 1b, ... 1n).

4. Laseroszillator gemäß Anspruch 3 in Littrow-Anordnung, aber mit einem gemeinsamen Strahlaufweiter (4) für die verschiedenen Resonatoren, die sich nur durch verschiedene Gitter (1a, 1b) unterscheiden.

5. Laseroszillator gemäß einem der Ansprüche 3 oder 4, aber mit einer zweiten Reflexion des Strahls auf dem Gitter außerhalb des Oszillators, um die Superstrahlung zu unterdrücken, wobei das polygonale Prisma (2) einen doppelten Strahlversatz bewirkt.

6. Laseroszillator gemäß einem der Ansprüche 3 oder 4, aber mit einer zweiten Reflexion des Strahls auf dem Gitter außerhalb des Oszillators, um die Superstrahlung innerhalb der U-förmigen Kavität zu unterdrücken, wobei das polygonale Prisma (2) einen doppelten Strahlversatz bewirkt.

7. Laseroszillator gemäß einem der Ansprüche 3 oder 4, wobei die Auskopplung des Strahls durch partielle Reflexion auf einem gemeinsamen Element der verschiedenen Kavitäten erreicht wird.

8. Laseroszillator gemäß einem der Ansprüche 1 bis 7, aber unter zusätzlicher Verwendung eines gemeinsamen Etalons für die verschiedenen Resonatoren, um die Linienbreite zu verringern, wobei jeder der Resonatoren auf die verschiedenen Moden des Etalons abgestimmt werden kann.

9. Laseroszillator gemäß einem der Ansprüche 1 bis 8, wobei die Resonatoren durch elektrooptisch-geschaltete Systeme und/oder nichtlinear optisch-geschaltete Systeme und/oder plasmageschaltete Systeme und/oder druckabhängig doppelbrechend schaltende Systeme und/oder akustooptisch-geschaltete Systeme gebildet werden.

10. Laseroszillator gemäß einem der Ansprüche 1 bis 9, wobei das Prisma (2) durch eine fiberoptische Matrix ersetzt ist.

11. Laseroszillator nach einem der Ansprüche 1 bis 7 mit einem in das sich bewegende Prisma durch Spaltung oder Aufdampfung integrierten Diskriminisationselement, das durch Feineinstellung des Winkels eine Feinjustierung der Laserwellenlänge bei deutlich erhöhter Auflösung ermöglicht.

**Claims**

1. Laser oscillator for the simultaneous or alternating production of several wavelengths, comprising an active medium (3), which emits on several discrete wavelengths or a continuous spectrum and is introduced between several resonators (4; 1a, 1b... 1n), which are geometrically coupled by a polygonal prism (2) and consequently allow a simultaneous operation or by rotation and/or translation of the prism (2) an alternating operation without a further modification of the device and where the prism is producing a within the active medium spatial separated division of the repective several wavelengths.

2. Laser oscillator according to claim 1, wherein the polygonal prism (2) used for radiation is slightly bevelled on one or more sides and consequently allows the production of different pairs of closely juxtaposed wavelengths and/or has flattened edges and consequently by dividing the incident beam into three exiting beams permits the simultaneous operation on three different wavelengths.

3. Laser oscillator according to one of the claims 1 to 2, wherein the coupled resonators comprise a common beam outcoupling (4) and in each case an arrangement of dispersive prisms or a double refracting filter and a mirror as the termination of the cavity (1a, 1b ... 1n) or each case an arrangement of dispersive gratings in a Littrow or Littman (i.e. grazing incidence) arrangement (1a, 1b, ... 1n).

4. Laser oscillator according to claim 3 in a Littrow arrangement, but with a common beam expander (4) for the different resonators, which only differ through different gratings (1a, 1b).

5. Laser oscillator according to one of the claims 3 or 4, but with a second reflection of the beam on the grating outside the oscillator in order to suppress superradiance, wherein the polygonal prism (2) brings about a double beam displacement.

6. Laser oscillator according to one of the claims 3 or 4, but with a second reflection of the beam on the grating outside the oscillator, in order to suppress the superradiance within the cavity (U-shaped), wherein the polygonal prism (2) brings about a double beam displacement.

7. Laser oscillator according to one of the claims 3 or 4, wherein the outcoupling of the beam is brought about by partial reflection on a common element of the different cavities.

8. Laser oscillator according to one of the claims 1 to 7, but accompanied by the additional use of a common etalon for the different resonators in order to reduce the line width, wherein each of the resonators is tuned to different modes of the etalon.

9. Laser oscillator according to one of the claims 1 to 8, wherein the resonators are formed by electrooptically switched systems and/or non-linear optically switched systems and/or plasma switched systems and/or pressure-dependent, double refracting switching systems and/or acoustooptically switched systems.

10. Laser oscillator according to one of the claims 1 to 9, Wherein the prism (2) is replaced by a fibre optic matrix.

11. Laser oscillator according to one of the claims 1 to 7 with a discrimination element integrated into the moving prism by splitting or vacuum deposition and which by fine adjustment oF the angle permits a fine setting of the laser wavelength with much higher resolution.

**Revendications**

1. Oscillateur laser permettant l'émission simultanée ou alternée de plusieurs longueurs d'onde, comprenant un milieu actif (3), émettant sur plusieurs raies discrètes ou sur un spectre continu, et plusieurs résonateurs (4; la, 1b,..., 1n) qui sont géométriquement couplés par un prisme polygonal (2) et ainsi permettant un fonctionnement simultané ou alterné par rotation de celui-ci sans autre modification supplementaire de l'arrangement, puisque le prisme produit dans l'oscillateur une séparation géométrique des différentes longueurs d'onde.

2. Oscillateur laser selon le point 1, mais où le prisme polygonal utilisé (2) possède une ou plusieurs faces légèrement biaisées, permettant l'émission de paires différentes de longueurs d'onde idoines et/ou des arêtes coupées permettant, au travers de la séparation du faisceau entront en 3 faisceaux sortants, le fonctionnement simultané sur 3 longueurs d'onde.

3. Oscillateur laser selon le point 1 ou 2, mais ou les résonateurs couplés utilisent un miroir de sortie (4) commun mais chacun un système de prismes dispersifs ou de filtres biréfrigents et un miroir de fin de cavité séparé (1a, 1b, ... 1n) ou un système de réseaux dispersifs en configuration Littrow ou Littman (e.à.d. incidence rasante) (1a 1b, ... 1n).

4. Oscillateur laser selon 3 en configuration Littrow, mais avec un expanseur de faisceau commun (4) pour les différents résonateurs, qui ne se différencient ainsi qu' au travers de différents réseaux.

5. Oscillateur laser selon 3 ou 4, mais avec une deuxième réflexion du faisceau sur le réseau à l'extérieur de l'oscillateur, pour supprimer la superradiance, mais où le prisme polygonal (2) effectue par conséquent un double déplacement du faisceau.

6. Oscillateur selon 3 ou 4 mais avec une deuxième réflexion du faisceau sur le réseau à l'extérieur de l'oscillateur, afin de supprimer la superradiance à l'intérieur de la cavité en forme de U, et où le prisme polygonal (2) effectue un double déplacement.

7. Oscillateur laser selon 3 où 4, mais où le couplage de sortie du faisceau s'effectue au travers d'une réflexion sur un élément commun aux différentes cavités.

8. Oscillateur laser selon un des points 1 à 7, mais utilisant un étalon commun supplémentaire pour les différentes résonateurs, afin de réduire la largeur spectrale d'emission, et où chacun des résonateurs peut être accordé sur les différents modes de l'éta-

Ion.

9. Oscillateur laser selon un des points 1 à 8, mais où les résonateurs sont formés au travers de systèmes electro-optiques et/ou systèmes à plasma et/ou systèmes acousto-optiques.

10. Oscillateur laser selon un des points 1 à 9, mais où le prisme (2) est remplacé par une matrice de fibres optiques.

11. Oscillateur laser selon un des points 1 à 7 mais dont le prisme créant le déplacement des faisceaux contient un élément discriminant les longueurs onde intégré, au travers de découpes et/ ou couches dêposées, qui, par un ajustement fin de l'angle d'incidence du prisme, permet une résolution spectrale accrue.

(1A)

(1B)

(1C)

FIG. 1

FIG. 2

FIG. 3

FIG. 4